(19) Europäisches Patentamt
European Patent Office
Office européen des brevets

(11) **EP 1 511 210 B1**

(12) **EUROPEAN PATENT SPECIFICATION**

(45) Date of publication and mention
of the grant of the patent:
**09.11.2011 Bulletin 2011/45**

(51) Int Cl.:
*H04L 1/06* (2006.01)    *H04L 25/02* (2006.01)
*H04L 27/26* (2006.01)

(21) Application number: **03292120.7**

(22) Date of filing: **28.08.2003**

(54) **OFDM channel estimation and tracking for multiple transmit antennas**

OFDM Kanalschätzung und -nachführung unter Verwendung mehrere Sendeantennen

Estimation et poursuite de canal d'OFDM par utilisation d' antennes d'émission multiples

(84) Designated Contracting States:
**AT BE BG CH CY CZ DE DK EE ES FI FR GB GR
HU IE IT LI LU MC NL PT RO SE SI SK TR**

(43) Date of publication of application:
**02.03.2005 Bulletin 2005/09**

(73) Proprietor: **Motorola Solutions, Inc.
Schaumburg IL 60196 (US)**

(72) Inventors:
• **Ribeiro Dias, Alexandre
75014 Paris (FR)**
• **de Courville, Marc
75014 Paris (FR)**
• **Muck, Markus
75013 Paris (FR)**

(74) Representative: **Cross, Rupert Edward Blount et al
Boult Wade Tennant
Verulam Gardens
70 Gray's Inn Road
London WC1X 8BT (GB)**

(56) References cited:
**WO-A-02/45329     US-A1- 2002 041 635**

• **MUQUET B ET AL: "OFDM with trailing zeros versus OFDM with cyclic prefix: links, comparisons and application to the HiperLAN/2 system" ICC 2000. 2000 IEEE INTERNATIONAL CONFERENCE ON COMMUNICATIONS. CONFERENCE RECORD. NEW ORLEANS, LA, JUNE 18-22, 2000, IEEE INTERNATIONAL CONFERENCE ON COMMUNICATIONS, NEW YORK, NY: IEEE, US, vol. 2 OF 3, 18 June 2000 (2000-06-18), pages 1049-1053, XP002231869 ISBN: 0-7803-6284-5**
• **DENEIRE L ET AL: "TRAINING SEQUENCE VERSUS CYCLIC PREFIX-A NEW LOOK ON SINGLE CARRIER COMMUNICATION" IEEE COMMUNICATIONS LETTERS, IEEE SERVICE CENTER, PISCATAWAY,US, US, vol. 5, no. 7, July 2001 (2001-07), pages 292-294, XP001103154 ISSN: 1089-7798**

**Description**

Field of the invention

This invention relates to communication using Orthogonal Frequency Division Multiplexing ('OFDM') and, more particularly, to channel estimation and tracking in OFDM communication.

Background of the invention

This invention relates to communication using Orthogonal Frequency Division Multiplexing ('OFDM') and, more particularly, to channel estimation and tracking in OFDM communication.

Background of the invention

OFDM communication has been chosen for most of the modern high-data rate communication systems (Digital Audio Broadcast - DAB, Terrestrial Digital Video Broadcast - DVB-T, and Broadband Radio Access Networks - BRAN such as HIPERLAN/2, IEEE802.11a/g, IEEE802.15.3a, for example, and is considered for future wide-band telephony standards, referred to as "4G"). However, in most cases the receiver needs an accurate estimate of the channel impulse response. Also, in the context of wireless local area networks ('WLANs'), current data rates (54Mbps on top of the physical layer) are foreseen to be insufficient for very dense urban deployment, such as for hot spot coverage. This is the motivation for IEEE to propose and specify in the scope of the IEEE802.11n (the former High Throughput Study Group) solutions for very high data rate WLANs (targeting at least 100Mbps on top of the medium access control ('MAC') layer) in the 5GHz band. Another area of investigation is that of higher frequency bands where more spectrum is available such as the 60GHz band.

One way of achieving higher data rates is to provide the system with multiple antennas both at the transmitter and at the receiver. By doing so, it is possible to increase the quality of the communication link by exploiting the spatial diversity dimension using for instance Space Time Block Codes ('STBC'), or to increase the spectral efficiency of the system by transmitting simultaneously different streams using Spatial Division Multiplexing. Therefore, Multiple Transmit Multiple Receive (MTMR) antenna systems are strong candidates for next generation WLANs and certain other OFDM communication systems.

In the so-called Cyclic Prefix OFDM (CP-OFDM) modulation scheme, each OFDM symbol is preceded by a guard interval that is longer than the channel impulse response (CIR) and a cyclic prefix or postfix, hereinafter referred to collectively as a cyclic affix, is inserted at the transmitter in a guard interval between consecutive OFDM symbols, the cyclic affix consisting of samples circularly replicated from the useful OFDM symbol time domain samples. The cyclic affix enables very simple calculation for the equalisation at the receiver, where the cyclic affix is discarded and each truncated block is processed, for example using Fourier Transform (usually Fast Fourier Transform (FFT)), to convert the frequency-selective channel output into parallel flat-faded independent sub-channel outputs, each corresponding to a respective sub-carrier. For equalisation purposes, numerous strategies exist. Following the zero forcing approach, for example, each sub-channel output is, unless it is zero, divided by the estimated channel coefficient of the corresponding sub-carrier.

In the Zero Padded OFDM (ZP-OFDM) modulation scheme, as described for example in the article by B. Muquet, Z. Wang, G. B. Giannakis, M. de Courville, and P. Duhamel entitled "Cyclic Prefixing or Zero Padding for Wireless Multicarrier Transmissions" IEEE Trans. on Communications, 2002, the cyclic affix is replaced by null samples. This solution relying on a larger FFT demodulator, has the merit to guarantee symbol recovery irrespective of channel null locations when the channel is known.

However channel estimation and tracking remains an issue, especially in the presence of high mobility or high frequency and data rates. Like other digital communication systems, OFDM modulation encounters problems at high Doppler spreads, which occur notably when the user is moving fast, for example in a car, or even at pedestrian speeds when investigating the area of higher frequency bands where more spectrum is available such as the 60GHz band. Accordingly, the channel impulse response needs to be constantly tracked and updated, especially in the-presence of high Doppler spreads.

It would be desirable for the OFDM modulation system to keep all the advantages of classic OFDM and additionally allow very simple and (semi-)blind channel estimation at the receiver. Semi-blind channel estimation means that substantially no additional redundancy is added to the system with respect to classic CP-OFDM, and therefore no bandwidth for data transmission would be lost; however, semi-blind channel estimation can be realized thanks to deterministic sequences known at both the transmitter and the receiver sides, as long as there is no substantial bandwidth loss for data transmission. Such a system would be advantageous in low-mobility scenarios and would make OFDM systems applicable to high-mobility scenarios as well.

Our co-pending European Patent Application EP 02 292 730.5 describes a communication method in which the CP-OFDM time domain redundancy is replaced by a pseudo-randomly weighted deterministic sequence which leads to the so called Pseudo Random Postfix OFDM (PRP-OFDM). The advantages of being able to use ZP-OFDM are preserved and low complexity channel estimation at the receiver is made possible. Note that PRP-OFDM does not impact the achieved useful data rate and spectral efficiency compared to the classical CP-OFDM modulator, apart possibly from transmission of small amounts of data for the calculation of pseudo random parameters, since the only modification is the affix content, thus the low complexity channel estimation possible at the receiver side is also semi-blind.

Our co-pending European Patent Application describes the application of PRP-OFDM to single transmit antenna systems and it is desirable to apply comparable techniques to MTMR systems, capable of using more than one transmit and/or receive antenna.

US 2002/0041635 describes an OFDM system in which one or more preambles, for example training symbols, are inserted between OFDM data symbols.

## Summary of the invention

The present invention provides a method of communication using Orthogonal Frequency Division Multiplexing, and a system as described in the accompanying claims.

## Brief description of the drawings

Figure 1 is a schematic block diagram of a transmitter in a communication system in accordance with one embodiment of the invention, given by way of example,

Figure 2 is a schematic block diagram of a receiver in the communication system whose transmitter is shown in Figure 1,

Figure 3 is a diagram of signals appearing in operation of the receiver of Figure 2, and

Figure 4 is a diagram of a moving average Doppler module for the demodulator of Figure 1,

## Detailed description of the preferred embodiments

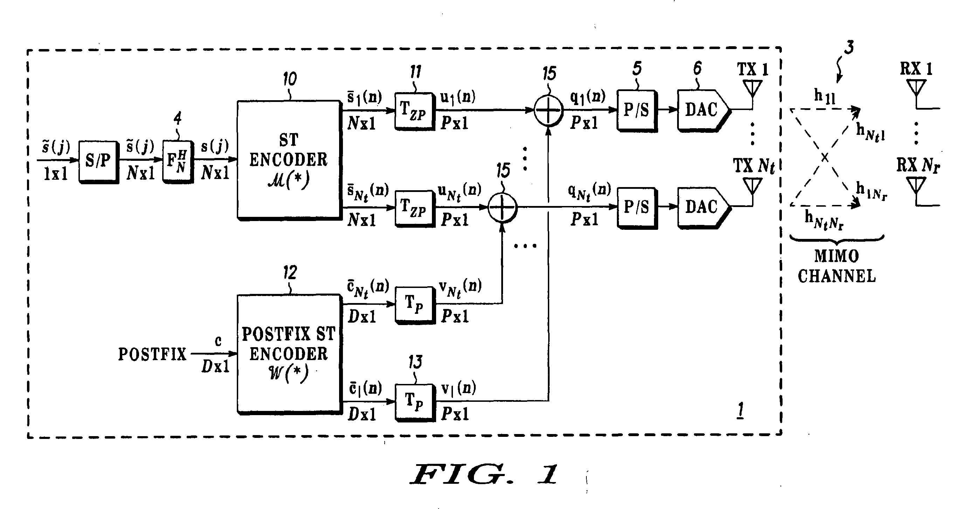

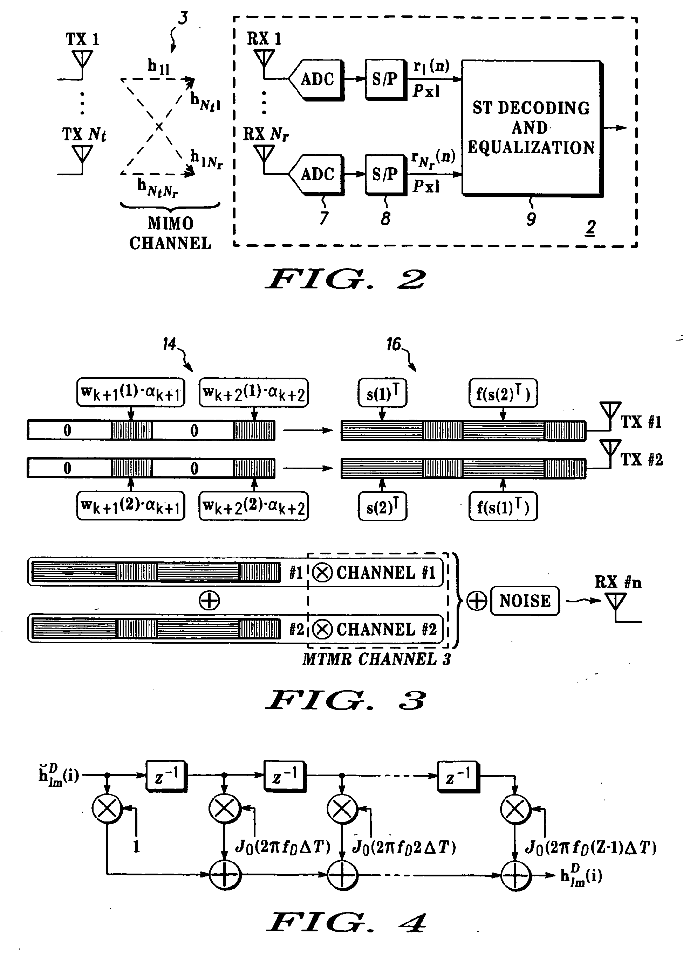

Figure 1 and Figure 2 show an OFDM communication system in accordance with one embodiment of the invention comprising a transmitter including an OFDM modulator 1 and a receiver including an OFDM demodulator 2, the transmitter and the receiver communicating over a communication channel 3.

The OFDM communication method of this embodiment of the present invention enables estimation and tracking of the Multiple Input Multiple Output ('MIMO') channels in coherent multiple transmit antenna / multiple receive antenna ('MTMR') systems, without any specific limit to the number of transmit (TX) and receive (RX) antennas and without imposing any particular Space-Time Code (STC). Data and affix vectors are independently encoded by two STC and enable a semi-blind estimation of all the MIMO channels exploiting only the order-one statistics of the received signal.

In the following description, lower (upper) boldface symbols will be used for column vectors (matrices) sometimes with subscripts N or P emphasizing their sizes (for square matrices only); tilde ('~') will denote frequency domain quantities; argument $i$ will be used to index blocks of symbols; $H$ ($T$) will denote Hermitian (transpose) operations.

Figure 1 depicts the baseband discrete-time block equivalent model of an $N$-carrier PRP-OFDM MTMR transceiver with $N_t$ transmit and $N_r$ receive antennae. The communication system is described with reference to Space-Time (ST) block codes ('STBCs') but it will be appreciated that the invention is also applicable to other code systems. In the transmitter, the initial serial bit stream of constellation symbols $\tilde{s}(jN),\cdots,\tilde{s}(jN + N$ -1$)$ is converted to a set of vectors in a serial-to-parallel converter (not shown); the $j$th $Nx1$ input digital vector $\tilde{\mathbf{s}}(j)$ is then modulated by an Inverse Fast Fourier Transform ('IFFT') matrix $\mathbf{F}_N^H$ in a transformer 4, where $[\mathbf{F}_N]_{k,l} = \frac{1}{\sqrt{N}} W_N^{kl}$, $0 \leq k < N$, $0 \leq l < N$ and $W_N = e^{-j2\pi/N}$.

The resulting $Nx1$ time domain vector $\mathbf{s}(j)$ is processed by a suitable ST encoder matrix $M$ in an encoder 10, as shown in Figure 1, creating outputs $\overline{\mathbf{S}}(\mathbf{i}) = \mathcal{M}(\mathbf{s}(iN_t),\cdots,\mathbf{s}(iN_t + N_t - 1)) = \{\mathbf{s}_l(iM + k), 1 \leq l \leq N_t, 0 \leq k \leq M\}$ where $i$ is the block number $l$ is the number of the TX antenna and $n=iM+k$ indexes the outputs in Figure 1. It will be appreciated that, at least in the context of STBCs, $M$ can differ from $N_t$; In particular, the STBC may lead to rectangular $\overline{\mathbf{S}}(\mathbf{i})$, that is to say

that $M > N_t$. For the sake of simplicity, we assume in the following description that $\mathcal{M}$ operates on $N_t$; inputs ($\mathbf{s}(iN_t),\cdots$, $\mathbf{s}(iN_t + N_t - 1)$). However, the invention can be straightforwardly applied to $M$ with other numbers of inputs. In this embodiment of the invention, the $\overline{\mathbf{s}}_l(iM + k)$ are linearly precoded in a precoder 11 by a zero-padded OFDM ('ZP-OFDM')

precoding matrix $\mathbf{T}_{ZP}$, where $\mathbf{T}_{ZP} = \begin{bmatrix} \mathbf{I}_N \\ \mathbf{0}_{D,N} \end{bmatrix}_{P \times N}$ and $\mathbf{u}_l(n) = \mathbf{T}_{ZP}\overline{\mathbf{s}}_l(n), 1 \le l \le N_t$.

The affix contents $v_l(n)$ are added to the data symbols $\mathbf{u}_l(n) = \mathbf{T}_{ZP}\overline{\mathbf{s}}_l(n), 1 \le l \le N_t$ resulting in the output vectors $\mathbf{q}_l(n)$. The output vectors $\mathbf{q}_l(n)$ are converted to a series signal by a parallel-to-series converter 5, a pseudo random postfix being inserted in the signal into guard intervals between each consecutive OFDM symbol to produce a series digital signal $s_l(n)$ on the $l$th TX atenna. The series digital signal $s_l(n)$ is then converted to an analogue signal $s_l(t$ by a digital-to-analogue converter 6 and transmitted over the channel 3.

More particularly, in a preferred embodiment of the invention, the postfix that is added in the guard interval comprises a pre-calculated suitable vector that is independent of the data and that is weighted by a first factor $\alpha_k$ and a second factor $w_i(k)$. In one embodiment of the invention, the first factor $\alpha_k$ is different from one time-domain OFDM symbol to another and is known both to the transmitter 1 and to the receiver 2, so that any time domain (cyclo-)stationarity (leading to strong undesired frequency contributions at the repetition frequency) is avoided. In another embodiment of the invention, in which the symbols are coded in blocks, the first factor $\alpha_k$ is different from one time-domain OFDM symbol block to another but is the same for each symbol of the same block. The second factor $w_i(k)$ enables one of the transmit antennas to be distinguished from another.

With an OFDM modulator in the transmitter functioning in this way, semi-blind channel estimation in the receiver can be done simply and at low arithmetical complexity. In particular, the receiver can constantly estimate and track the channel impulse response without any loss of data bandwidth compared to CP-OFDM, other than the transmission of PR-calculation parameters. Moreover, the demodulator at the receiver can have advantageous characteristics, ranging from very low arithmetical cost (at medium performance) to les low arithmetical cost (with very good system performance).

As described in our copending European Patent Application referred to above for the single antenna case, several choices for the first factor $\alpha_k$ are possible. It is possible to choose $\alpha_k$ of any complex value. However, any $\alpha_k$ with $|\alpha_k| \ne 1$ leads to performance degradation compared to preferred embodiments of the invention.

It is possible to limit the choice of $\alpha_k$, somewhat less generally to a complex value with $|\alpha_k| = 1$. This choice usually leads to good system performance, but the decoding process risks to be unnecessarily complex. Preferred values of the first and second factors are described in more detail below.

Preferably, the first factor $\alpha_k$ is pseudo-random. In one embodiment of the present invention the first factor $\alpha_k$ is deterministic and is calculated both by the modulator 1 and the demodulator 2 using the same algorithm and parameters that are stored in memory both in the transmitter and in the receiver. In another embodiment of the present invention, initialisation parameters for the algorithm are transmitted between the transmitter and the receiver to avoid systematically using the same sequence for the first factor $\alpha_k$. In yet another embodiment of the present invention, the first factor $\alpha_k$ is communicated from the transmitter 1 to the receiver 2, which still represents an acceptable overhead in certain circumstances.

In the embodiment of the present invention shown in Figure 1 and Figure 2, the affix is deterministic and is a

$Dx1$ postfix vector c treated in an encoder 12 by a specific ST encoder matrix $\mathcal{W}^l$ which outputs the $Dx1$ vectors $\overline{c}_l(n)$,

$1 \le l \le N_t$. The way in which $\mathcal{W}^l$ ensures identification of the complete MIMO channel is described in more detail below. The postfix vectors $\overline{c}_l(n), 1 \le l \le N_t$ are then linearly precoded in a precoder 13 by a ZP-OFDM matrix $\mathbf{T}_P$,

where $\mathbf{T}_P = \begin{bmatrix} \mathbf{0}_{N,D} \\ \mathbf{I}_D \end{bmatrix}_{P \times D}$, to produce zero-padded postfix vectors as shown at 14 in Figure 3.

The resulting vectors $\mathbf{v}_l(n)$ are finally added to the data symbols $\mathbf{u}_l(n)$ by adders 15: $\mathbf{q}_l(n) = \mathbf{u}_l(n) + \mathbf{v}_l(n), 1 \le l \le N_t$ to produce signals 16 for transmission.

The signals received at the receive antennas are the transmitted signals multiplied by the Channel Impulse Response ('CIR') $\mathbf{H}_{lm}$ and with the addition of noise and interference $\mathbf{n}_m(n)$. Let $\mathbf{H}_{lm}$ be a $PxP$ circulant matrix whose first row is given by $[h_{lm}(0),0,\cdots 0,h_{lm}(L - 1),\cdots,h_{lm}(1)]$, where $\mathbf{h}_{lm} = [h_{lm}(0),\cdots,h_{lm}(L - 1),0,\cdots 0]^T$ is the $Px1$ channel impulse response between the $l$th transmit and the $m$th receive antennæ; $D$ is chosen such that $D \geq L-1$. Define $\mathbf{H}_{lm}^{\mathsf{ISI}}$ as the lower triangular part of $\mathbf{H}_{lm}$ including the main diagonal which represents the Intra-Symbol-Interference (ISI); $\mathbf{H}_{lm}^{\mathsf{IBI}}$ shall contain the upper triangular part of $\mathbf{H}_{lm}$ representing the Inter-Block-Interference (IBI), such that $\mathbf{H}_{lm} = \mathbf{H}_{lm}^{\mathsf{ISI}} + \mathbf{H}_{lm}^{\mathsf{IBI}}$. Therefore, the received signal vector on the $m$th antenna, $1 \leq m \leq N_t$ is, given by:

$$\mathbf{r}_m(n) = \sum_{l=1}^{N_t} \left[ \mathbf{H}_{lm}^{\mathsf{ISI}} \mathbf{q}_l(n) + \mathbf{H}_{lm}^{\mathsf{IBI}} \mathbf{q}_l(n-l) \right] + \mathbf{n}_m(n)$$

where $\mathbf{n}_m(n)$ is an zero-mean additive white independent identically distributed gaussian noise term.

As shown in Figure 2, The demodulator 2 at the receiver comprises an analogue-to-digital converter 7 that converts the signals $r_m(t)$ received at the receive antennas to digital signals, a serial-to-parallel converter 8, which converts the received digital signals to received vectors $\mathbf{r}_m(n)$, and a demodulator and equaliser 9 that uses decoding matrices corresponding to the encoding matrices $\mathcal{W}$ and $\mathcal{M}$ to estimate the Channel Impulse Response CIR and demodulate the OFDM signals.

In the following description of the operation of the receiver, an order-one channel estimation algorithm is described first, assuming the channel to be static. Then, the effect of Doppler is introduced for the mobility case and the corresponding channel estimator in the Minimum Mean Square Error (MMSE) sense described.

First the received vector $\mathbf{r}_m(n)$ is expressed in an exploitable form for channel estimation. For that purpose, let $\mathbf{H}_{lm}^{D}$ be the $DxD$ circulant matrix of first row $[h_{lm}(0),0,\cdots 0,h_{lm}(L-1),\cdots,h_{lm}(1)]$. We define $\mathbf{H}_{lm}^{\mathsf{ISI},D}$ and $\mathbf{H}_{lm}^{\mathsf{IBI},D}$ such that $\mathbf{H}_{lm}^{D} = \mathbf{H}_{lm}^{\mathsf{ISI},D} + \mathbf{H}_{lm}^{\mathsf{IBI},D}$. The signal $\mathbf{r}_m(n)$, received during the $n$th OFDM symbol on the $m$th antenna, $1 \leq m \leq N_t$, is equal to:

$$\mathbf{r}_m(\mathbf{n}) = \sum_{l=1}^{N_t} \begin{bmatrix} \mathbf{H}_{lm}^{\mathsf{ISI},D} \overline{\mathbf{s}}_{l,0}(n) + \mathbf{H}_{lm}^{\mathsf{IBI},D} \overline{\mathbf{c}}_l(n-1) \\ \vdots \\ \mathbf{H}_{lm}^{\mathsf{IBI},D} \overline{\mathbf{s}}_{l,1}(n) + \mathbf{H}_{lm}^{\mathsf{ISI},D} \overline{\mathbf{c}}_l(n-1) \end{bmatrix} + \begin{bmatrix} \mathbf{n}_{m,0}(n) \\ \vdots \\ \mathbf{n}_{m,1}(n) \end{bmatrix} \qquad \textbf{Equation 1}$$

where $\overline{\mathbf{s}}_{l,0}(n)$, $\overline{\mathbf{s}}_{l,1}(n)$, $\mathbf{n}_{m,0}(n)$, $\mathbf{n}_{m,1}(n)$ are respectively the first $D$ and last $D$ samples of $\overline{\mathbf{s}}_l(n)$ and $\mathbf{n}_m(n)$.

Equation 1 indicates that a superimposition of the various postfixes convolved by the corresponding channels is interfering with the useful data. An easy independent retrieval of each of the channels based on the sole observation of the postfix contributions is obtained through isolation of each postfix convolved by its related channel. As detailed below, a way to achieve that condition is to perform a Fast Fourier Transform on the postfixes in the demodulator and equaliser 9 using a weighting ST block coding scheme $\mathcal{W}$ of the postfix $\mathbf{c}$ according to the following postfix generation process :

$$\begin{bmatrix} \overline{\mathbf{c}}_l(iM) & \cdots & \overline{\mathbf{c}}_l(iM+M-1) \\ \vdots & \ddots & \vdots \\ \overline{\mathbf{c}}_{N_t}(iM) & \cdots & \overline{\mathbf{c}}_{N_t}(iM+M-1) \end{bmatrix} = \underbrace{\begin{bmatrix} \mathbf{w}_l(0)\alpha(iM) & \cdots & \mathbf{w}_l(M-1)\alpha(iM+M-1) \\ \vdots & \ddots & \vdots \\ \mathbf{w}_{N_t}(0)\alpha(iM) & \cdots & \mathbf{w}_{N_t}(M-1)\alpha(iM+M-1) \end{bmatrix}}_{\mathcal{W}} \otimes \mathbf{c}$$

**Equation 2**

where $\otimes$ is the Kronecker product and $\mathbf{c}$, $\alpha(n)$ are respectively the deterministic postfix and the pseudo-random weighting factors introduced in our co-pending European Patent Application EP 02 292 730.5 for the single antenna case. The pseudo-random weighting factors $\alpha(n)$ are used to convert the deterministic postfix c into a pseudo-random one. Note that a new set of deterministic weighting factors is introduced, and gathered in the $M \times N_t$ matrix **W** corresponding to the matrix **W** used for encoding the postfixes in the transmitter encoder, with $[\mathbf{W}]_{k,l-1} = w_l(k)$, $0 \le k < M, 1 \le l \le N_t$. **W** is used to remove the interference between all transmitted postfixes and thus is invertible in this embodiment of the present invention: full column rank (**rank(W)** = $N_t$). In the following description, we choose W orthogonal for this embodiment of the present invention, such that $\mathbf{W}^H\mathbf{W} = \mathbf{I}_{N_t}$.

With the assumption of a static channel, an order-one channel estimator in the demodulator and equaliser 9 functions as follows. The first and last $D$ samples of $\mathbf{r}_m(n)$ are denoted respectively by $\mathbf{r}_{m,0}(n)$ and $\mathbf{r}_{m,1}(n)$. By setting

$n=iM+k$ and assuming the transmitted time domain signal $\overline{\mathbf{s}}_l(n)$ to be zero mean for all $l$, we use Equations 1 and 2 to compute for each $k$, $0 \le k < M$, the following $Dx1$ vector:

$$\mathbf{d}_m^k(i) = \frac{\mathbf{r}_{m,l}(iM+k) + \mathbf{r}_{m,0}(iM+k+1)}{\alpha(iM+k)}$$

**Equation 3**

Next, $\mathbf{d}_m^k = \mathbb{E}\left[\mathbf{d}_m^k(i)\right]$ is defined as the expectation of $\mathbf{d}_m^k(i)$. Due to the deterministic nature of the postfixes, it can be verified from Equation 1 that:

$$\mathbf{d}_m^k = \sum_{l=1}^{N_t}\left[\mathbf{H}_{lm}^{\mathbf{ISI},D} + \mathbf{H}_{lm}^{\mathbf{IBI},D}\right]w_l(k)\mathbf{c} = \sum_{l=1}^{N_t}\mathbf{H}_{lm}^D w_l(k)\mathbf{c}$$

**Equation 4**

Thus the $MDx1$ vector $\mathbf{d}_m = \left[\left(\mathbf{d}_m^0\right)^T, \cdots, \left(\mathbf{d}_m^{M-1}\right)^T\right]^T$ can be expressed for each receive antenna as:

$$\mathbf{d}_m = \sum_{l=1}^{N_t}\begin{bmatrix} \mathbf{H}_{lm}^D w_l(0)\mathbf{c} \\ \vdots \\ \mathbf{H}_{lm}^D w_l(M-1)\mathbf{c} \end{bmatrix} = (\mathbf{W} \otimes \mathbf{I}_D)\begin{bmatrix} \mathbf{H}_{lm}^D\mathbf{c} \\ \vdots \\ \mathbf{H}_{N_t m}^D\mathbf{c} \end{bmatrix}$$

**Equation 5**

Since **W** is chosen orthogonal, multiplying each $\mathbf{d}_m$, $1 \le m \le N_t$ by $(\mathbf{W} \otimes \mathbf{I}_D)^H$ in the demodulator and equaliser 9 removes completely the interference between channel contributions $\mathbf{H}_{lm}^{D}$, $1 \leq l \leq N_t$.

Once the interference between channel contributions is removed the estimation algorithms of the single-antenna case of our co-pending European Patent Application EP 02 292 730.5 can be applied in the demodulator and equaliser 9:

$$\mathbf{H}_{lm}^{D}\mathbf{c} = \mathbf{C}_{D}\mathbf{h}_{lm}^{D} = \mathbf{F}_{D}^{H}\widetilde{\mathbf{C}}_{D}\mathbf{F}_{D}\mathbf{h}_{lm}^{D} \qquad \textbf{Equation 6}$$

where $\mathbf{C}_D$ is a $DxD$ circulant matrix with the first row $[c(0), c(D\text{-}1), \cdots, c(1)]$, $\widetilde{\mathbf{C}}_D = \mathbf{diag}\{\mathbf{F}_D\mathbf{c}\}$, and $\mathbf{h}_{lm}^{D}$ represents the $D$ first coefficients of $\mathbf{h}_{lm}$. Hence, the estimate $\hat{\mathbf{h}}_{lm}^{D}$ of the time domain channel impulse response $\mathbf{h}_{lm}^{D}$ in the demodulator and equaliser 9 is obtained by multiplying $\mathbf{H}_{lm}^{D}$ by $\mathbf{F}_{D}^{H}\widetilde{\mathbf{C}}_{D}^{-1}\mathbf{F}_{D}$, $1 \leq l \leq N_t, 1 \leq m \leq N_t$. Note that $\widetilde{\mathbf{C}}_{D}^{-1}$ is a diagonal matrix that is known to both the transmitter and receiver and can thus be precalculated. Subsequently, $\mathbf{h}_{lm}^{D}$ is preferably transformed to the $Px1$ frequency domain vector $\hat{\tilde{\mathbf{h}}}_{lm} = \mathbf{F}_{P}\left[\mathbf{I}_{D}^{T}, \mathbf{0}_{N,D}^{T}\right]^{T} \hat{\mathbf{h}}_{lm}^{D}$. This MIMO channel estimation (i.e. estimation of all channels between any transmit and any receive antenna) is used to space-time decode and equalise the received data signals, as described in more detail in examples below, such that the transmitted data signals can be recovered.

The above channel estimator can be extended to further improve reception in mobile environments by using any Doppler model, and by minimizing any performance criterion. An example is now given, in a preferred embodiment of the present invention based on the introduction of a Doppler model; the estimator aims at minimizing the Mean Square Error (MSE).

The Doppler module shown in Figure 4 is introduced in the demodulator and equaliser 9 to modify the order-one autoregressive model for the Channel Impulse Response ('CIR') between transmit antenna l and receive antenna m separately: $\mathbf{h}_{lm}^{D}(n) = J_{0}(2\pi f_{D}\Delta T)\mathbf{h}_{lm}^{D}(n-1) + \breve{\mathbf{h}}_{lm}^{D}(n)$ where $J_{0}(\cdot)$ is the 0th order Bessel function, $f_D$ is the Doppler frequency, $\Delta T$ is the MTMR PRP-OFDM block duration and $\breve{\mathbf{h}}_{lm}^{D}(n)$ is zero-mean complex Gaussian of constant variance. The same CIR correlations as the ones provided by the known Jakes model are obtained even in the presence of large Doppler frequencies. This is achieved by forcing the correlation $\mathbf{E}\left[\left(\mathbf{h}_{lm}^{D}(n)\right)^{H}\mathbf{h}_{lm}^{D}(k)\right] = J_{0}(2\pi f_{D}(k-n)\Delta T)\forall k > n$. This way the approximation $J_0(2\pi f_D(k\text{-}n)\Delta T) \approx (J_0(2\pi f_D\Delta T))^{(k\text{-}n)}$, inherent to the order-one autoregressive estimation, is avoided. This modification leads to the following moving average estimation:

$$\mathbf{h}_{lm}^{D}(n) = \sum_{k=0}^{n} J_{0}(2\pi f_{D}k\Delta T)\breve{\mathbf{h}}_{lm}^{D}(n-k) \qquad \textbf{Equation 7}$$

As for the order-one autoregressive model, so-called process-noise vectors $\breve{\mathbf{h}}_{lm}^{D}(n)$ are introduced assuming $\mathbf{E}\left[\breve{\mathbf{h}}_{lm}^{D}(n)\left(\breve{\mathbf{h}}_{lm}^{D}(n)\right)^{H}\right] = \mathbf{0}$ for $n \neq k$ and $\breve{\mathbf{h}}_{lm}^{D}(0) = \mathbf{h}_{lm}^{D}(0)$ being the CIR to be estimated. Assuming that CIR CIR $\mathbf{h}_{lm}^{D}(n)$ is estimated based on $Z$ noisy observations $\overline{\mathbf{d}}_{lm}(i) = \{\widetilde{\mathbf{d}}_{lm}(k), i \leq k < i+Z\}$, the expression $\widetilde{\mathbf{d}}_{lm}(i) = \left[(\mathbf{W} \otimes \mathbf{I}_{D})^{H}\mathbf{d}_{m}(i)\right]_{k}$, $(l-1)D \leq k < lD$ results from the convolution of the $i$th block postfix by channel

$\mathbf{h}_{lm}^{D}(n)$ corrupted both by thermal noise and the OFDM data symbols. The OFDM data symbols are assumed zero-mean and independent of same variance as the postfix samples. $\mathbf{d}_{m}(i) = \left[ \left( \mathbf{d}_{m}^{0}(i) \right)^{T}, \cdots, \left( \mathbf{d}_{m}^{M-1}(i) \right)^{T} \right]^{T}$ contains the received symbols after equalization of the pseudo random weighting factor of the postfixes (Equation 3). Thus, $\overline{\mathbf{d}}_{lm}(i)$ can be expressed as follows:

$$\overline{\mathbf{d}}_{lm}(i) = (\mathbf{J} \otimes \mathbf{C}_{D}) \begin{bmatrix} \breve{\mathbf{h}}_{lm}^{D}(0) \\ \breve{\mathbf{h}}_{lm}^{D}(1) \\ \vdots \\ \breve{\mathbf{h}}_{lm}^{D}(Z-1) \end{bmatrix} + \mathbf{n}, \ where \qquad\qquad \textbf{Equation 8}$$

$$\mathbf{J} = \begin{bmatrix} 1 & 0 & \cdots & 0 \\ J_{0}(2\pi f_{D}\Delta T) & 1 & \ddots & 0 \\ \vdots & & \ddots & \vdots \\ J_{0}(2\pi f_{D}(Z-1)\Delta T) & J_{0}(2\pi f_{D}(Z-2)\Delta T) & \cdots & 1 \end{bmatrix}.$$

where n gathers the thermal noise and the interference from the OFDM data symbols. In order to guarantee the unit variance of each channel realisation, the norm of $\breve{\mathbf{h}}_{lm}^{D}(n), n = 0, \cdots, Z-1$ is chosen such that:

$$\sum_{n=0}^{Z-1} [\mathbf{J}]_{k,n}^{2} \ \mathbf{E}\left[ \left( \breve{\mathbf{h}}_{lm}^{D}(n) \right)^{H} \breve{\mathbf{h}}_{lm}^{D}(n) \right] = 1, \ k = 0,\ldots,Z-1. \quad \textbf{Equation 9}$$

It can thus be verified that the optimum estimator of $\mathbf{h}_{lm}^{D}(0) = \breve{\mathbf{h}}_{lm}^{D}(0)$ in the MMSE sense is given from Equation 8 by:

$$\hat{\mathbf{h}}_{lm}^{D}(i) = \mathbf{M}\left[ (\mathbf{J} \otimes \mathbf{C}_{D})\mathbf{D}_{\mathbf{R}_{\mathbf{h}}} (\mathbf{J} \otimes \mathbf{C}_{D})^{H} + \mathbf{R}_{\mathbf{n}} \right]^{-1} \overline{\mathbf{d}}_{m}(i) \quad \textbf{Equation 10}$$

with:

$$\mathbf{D}_{\mathbf{R}_{\mathbf{h}}} = \text{diag}\left\{ \mathbf{R}_{\breve{\mathbf{h}}_{lm}^{0}(0)}, \cdots, \mathbf{R}_{\breve{\mathbf{h}}_{lm}^{0}(Z-1)} \right\}$$
$$\mathbf{M} = \left[ 1, \cdots, J_{0}(2\pi f_{D}(Z-1)\Delta T) \right] \otimes \left( \mathbf{R}_{\breve{\mathbf{h}}_{lm}^{0}(0)} \mathbf{C}_{D}^{H} \right)$$

and $\mathbf{R}_{\mathbf{a}} = \mathbf{E}\left[ \mathbf{a}\mathbf{a}^{H} \right]$ is the auto-correlation matrix of the vector $\mathbf{a}$.

Since in practice the channel power profile is usually not known, in that case the assumption is made

that $\mathbf{R}_{\tilde{\mathbf{h}}^0_{l_m}(n)} \approx g_n \mathbf{I}_D$ for all $n$. The real gain $g_n$ is introduced for respecting the power constraints of Equation 9.

The above description presents generic channel estimation in the demodulator and equaliser 9 in accordance with embodiments of the present invention for both relatively static and high mobility environments. Their use for two STBC systems will now be described.

The first embodiment of STBC is based on ZP-OFDM decoding. The system includes modulators using pseudo-random postfixes at the transmitter and also equalizer structures derived for the MTMR case from those described for the Single Transmit Single Receive (STSR) case in our co-pending European Patent Application EP 02 292 730.5 based on the transformation of the received PRP-OFDM vector to the ZP-OFDM case. The system is described for the case of $N_t$ = 2 transmit and $N_r$ = 1 receive antennas, although it will be appreciated that the system is applicable to other numbers of antennas. The ST encoder operates over $N_t \times M$ vectors with $N_t = M$ = 2. Since $N_r$ = 1, the subscript $1 \leq m \leq N_r$ is not used in the following analysis. Perfect knowledge of the channels $\mathbf{h}_l$, $1 \leq l \leq N_t$ is assumed but it will be appreciated that the system is capable of working with imperfect channel knowledge.

At the transmitter, a $2 \times 1$ ZP-ST encoder $\mathcal{M}$ is used, which takes two consecutive OFDM symbols $\mathbf{s}(2i)$ and $\mathbf{s}(2i + 1)$ to form the following coded matrix:

$$\begin{bmatrix} \bar{\mathbf{s}}_1(2i) & \bar{\mathbf{s}}_1(2i+1) \\ \bar{\mathbf{s}}_2(2i) & \bar{\mathbf{s}}_2(2i+1) \end{bmatrix} = \begin{bmatrix} \mathbf{s}(2i) & -\mathbf{P}_N^0 \mathbf{s}^*(2i+1) \\ \mathbf{s}(2i+1) & \mathbf{P}_N^0 \mathbf{s}^*(2i) \end{bmatrix} \quad \textbf{Equation 11}$$

where the permutation matrices $\mathbf{P}_J^n$ are such that, for a $J \times 1$ vector $\mathbf{a}$ = $[a(0), \cdots, a(J-1)]^T$, we have $\left\{ \mathbf{P}_N^0 \mathbf{a} \right\}_p = a((J - p + n) \bmod J)$.

Since the channel has been estimated, as for the single antenna case described in our co-pending European Patent Application, it is always possible to retrieve the MTMR ZP-OFDM signals from Equation 1 by subtracting from the received signal the known PRP contribution:

$$\mathbf{r}^{ZP}(n) = \mathbf{r}(n) - \sum_{l=1}^{2} \left[ \mathbf{H}_l^{IBI} \mathbf{v}_l(n-1) + \mathbf{H}_l^{ISI} \mathbf{v}_l(n) \right] \quad \textbf{Equation 12}$$

which leads to $\mathbf{r}^{ZP}(n) = \sum_{l=1}^{2} \mathbf{H}_l \mathbf{T}_{ZP} \bar{\mathbf{s}}_l(n)$. Note that i) no constraint has to be set on W for the symbol recovery,

ii) the PRP interference cancellation procedure proposed is generic and can be applied to any suitable ST encoder $\mathcal{M}$.

A suitable detection algorithm is applied to the signal described by Equation 12 by the demodulator and equaliser 9. Noticing that $\mathbf{P}_P^N \mathbf{T}_{ZP} = \mathbf{T}_{ZP} \mathbf{P}_N^0$, we denote by $\tilde{\mathbf{D}}_1 = \text{diag}\{\tilde{\mathbf{h}}_1\}$, $\tilde{\mathbf{D}}_1 = \text{diag}\{\tilde{\mathbf{h}}_1\}$, $\tilde{\mathbf{n}}(2i) = \mathbf{F}_P \mathbf{n}(2i)$ and $\tilde{\mathbf{n}}(2i+1) = \mathbf{F}_P \mathbf{P}_P^N \mathbf{n}^*(2i+1)$; then if we switch to the frequency domain by computing $\tilde{\mathbf{y}}(2i) = \mathbf{F}_P \mathbf{r}^{ZP}(2i)$ and $\tilde{\mathbf{y}}(2i+1) = \mathbf{F}_P \left( \mathbf{P}_P^N \mathbf{r}^{ZP}(2i+1) \right)^*$, exploiting the fact that $\mathbf{H}_l = \mathbf{F}_P^H \tilde{\mathbf{D}}_l \mathbf{F}_P$, $1 \leq l \leq 2$, we can write:

$$\begin{bmatrix} \widetilde{\mathbf{y}}(2i) \\ \widetilde{\mathbf{y}}(2i+1) \end{bmatrix} = \underbrace{\begin{bmatrix} \widetilde{\mathbf{D}}_1 & \widetilde{\mathbf{D}}_2 \\ \widetilde{\mathbf{D}}_2^* & -\widetilde{\mathbf{D}}_1^* \end{bmatrix}}_{=\widetilde{\mathbf{D}}} \begin{bmatrix} \mathbf{F}_P \mathbf{T}_{ZP}\mathbf{s}(2i) \\ \mathbf{F}_P \mathbf{T}_{ZP}\mathbf{s}(2i+1) \end{bmatrix} + \begin{bmatrix} \widetilde{\mathbf{n}}(2i) \\ \widetilde{\mathbf{n}}(2i+1) \end{bmatrix} \quad \textbf{Equation 13}$$

where $\widetilde{\mathbf{D}}$ is an orthogonal channel matrix. Thus multiplying $\begin{bmatrix} \widetilde{\mathbf{y}}(2i)^T & \widetilde{\mathbf{y}}(2i+1)^T \end{bmatrix}^T$ by $\widetilde{\mathbf{D}}^H$ achieves the separation of the transmitted signals $\mathbf{s}(2i)$ and $\mathbf{s}(2i+1)$, and it can be shown that full transmit diversity is achieved. Note that the separation of signals allows the same equalisation schemes to be used in this embodiment of the present invention as in the single-antenna case described in our co-pending European Patent Application EP 02 292 730.5.

The second embodiment of STBC system is based on equalization of the full received block by diagonalisation of pseudo-circulant channel matrices. The ST data encoder $\mathcal{M}$ used in the demodulator and equaliser 9 is based on a version of the single antenna system described in our co-pending European Patent Application EP 02 292 730.5 modified to enable the equalization structure that is detailed below and outputs blocks of $N_t \times M$ vectors with $N_t = M =$ 2. $\mathcal{M}$ and $\mathcal{W}$ are specified such that they generate the following matrix $\mathbf{Q}(i) = \{\mathbf{q}_l(2i+k), 1 \le l \le 2, 0 \le k < 2\}$ at the antenna outputs:

$$\mathbf{Q}(i) = \begin{bmatrix} \begin{bmatrix} \mathbf{s}(2i) \\ \alpha(2i)\mathbf{c} \end{bmatrix} & -\mathbf{P}_P^0 \mathbf{Q}_{\beta(i)} \begin{bmatrix} \mathbf{s}^*(2i+1) \\ \alpha(2i+1)\mathbf{c}^* \end{bmatrix} \\ \begin{bmatrix} \mathbf{s}(2i+1) \\ \alpha(2i)\mathbf{c} \end{bmatrix} & \mathbf{P}_P^0 \mathbf{Q}_{\beta(i)} \begin{bmatrix} \mathbf{s}^*(2i) \\ \alpha(2i+1)\mathbf{c}^* \end{bmatrix} \end{bmatrix} \quad \textbf{Equation 14}$$

$\mathbf{P}_P^0$ being a permutation matrix defined as previously (inversing the order of the vector elements), $\alpha(i)$ is complex with $|\alpha(i)| = 1$ being pseudo-random complex weighting factors as defined in our co-pending European Patent Application for the single antenna case with $\alpha(2i+1) = \beta^2(i)\alpha(2i)$, and $\beta(i) = \alpha(2i-2)/\alpha(2i)$. $\mathbf{Q}_{\beta(i)}$ is defined as:

$$\mathbf{Q}_{\beta(i)} = \begin{bmatrix} \mathbf{0}_{D\times N} & \beta(i)\cdot\mathbf{I}_D \\ \mathbf{I}_N & \mathbf{0}_{N\times D} \end{bmatrix}.$$

The $D \times 1$ postfix vector $\mathbf{c}$ is chosen such that it has Hermitian symmetry, that is to say that the complex conjugate of the vector read backwards is equal to the original c. As in our co-pending European Patent Application, the channels are represented by PxP pseudo-circulant channel matrices $\mathbf{H}_l^{\beta(i)}$, $1 \le l \le 2$. These are identical to standard circulant convolution matrices with the upper triangular part multiplied by the scalar factor $\beta(i)$, in other words

$$\mathbf{H}_l^{\beta(i)} = \mathbf{H}_l^{ISI} + \beta(i)\mathbf{H}_l^{IBI}.$$

With $\mathbf{R}(i) = \begin{bmatrix} \mathbf{r}^T(2i) & \mathbf{r}^T(2i+1) \end{bmatrix}^T$ and the noise matrix $\mathbf{N}(i) = \begin{bmatrix} \mathbf{n}^T(2i) & \mathbf{n}^T(2i+1) \end{bmatrix}^T$, the received signals over $M = 2$ symbol times are given as follows:

$$R(i) = \begin{bmatrix} \sum_{l=1}^{2}\left[\mathbf{H}_l^{IBI}\mathbf{q}_l(2i-1) + \mathbf{H}_l^{ISI}\mathbf{q}_l(2i)\right] \\ \sum_{l=1}^{2}\left[\mathbf{H}_l^{IBI}\mathbf{q}_l(2i) + \mathbf{H}_l^{ISI}\mathbf{q}_l(2i+1)\right] \end{bmatrix} + N(i)$$

With $\hat{\mathbf{R}}(i) = \begin{bmatrix} \hat{\mathbf{r}}^T(2i) & \hat{\mathbf{r}}^T(2i+1) \end{bmatrix}^T$, the following operations are performed at the demodulator and equaliser 9 on the received vectors:

$$\hat{\mathbf{R}}(i) = \begin{bmatrix} \mathbf{r}(2i) + 2\mathbf{c}_1^{\beta(i)}(i) \\ \mathbf{Q}_{\beta(i)}^H \left(\mathbf{P}_P^0\left(\mathbf{r}(2i+1) + 2\mathbf{c}_2^{\beta(i)}(i)\right)\right)^* \end{bmatrix}$$

$$= \underbrace{\begin{bmatrix} \mathbf{H}_1^{\beta(i)} & \mathbf{H}_2^{\beta(i)} \\ \left(\mathbf{H}_2^{\beta(i)}\right)^H & -\left(\mathbf{H}_1^{\beta(i)}\right)^H \end{bmatrix}}_{= \mathbf{W}_H(i)} \begin{bmatrix} \begin{bmatrix} \mathbf{s}(2i) \\ \alpha(2i)\mathbf{c} \end{bmatrix} \\ \begin{bmatrix} \mathbf{s}(2i+1) \\ \alpha(2i)\mathbf{c} \end{bmatrix} \end{bmatrix}$$

where

$$\mathbf{c}_1^{\beta(i)}(i) = \alpha(2i)\beta(i)\mathbf{H}_1^{IBI}\mathbf{T}_P\mathbf{c},$$
$$\mathbf{c}_2^{\beta(i)}(i) = -\left[2\Re\{\alpha(2i)\}\mathbf{H}_1^{IBI} + 2\Im\{\alpha(2i)\}\mathbf{H}_2^{IBI}\right]\mathbf{T}_P\mathbf{c}.$$

In this embodiment of STBC system, the data symbols are separated in the demodulator and equaliser 9 by premultiplication of R($i$) by the Hermitian of the upper channel matrix $\mathbf{W}_H(i)$:

$$\mathbf{W}_H(i)\hat{\mathbf{R}}(i) = \begin{bmatrix} \mathbf{H}^{\beta(i)} & \mathbf{0}_{P\times P} \\ \mathbf{0}_{P\times P} & \mathbf{H}^{\beta(i)} \end{bmatrix} \begin{bmatrix} \begin{bmatrix} \mathbf{s}(2i) \\ \alpha(2i)\mathbf{c} \end{bmatrix} \\ \begin{bmatrix} \mathbf{s}(2i+1) \\ \alpha(2i)\mathbf{c} \end{bmatrix} \end{bmatrix}$$

with $\mathbf{H}^{\beta(i)} = \mathbf{H}_1^{\beta(i)}\left(\mathbf{H}_1^{\beta(i)}\right)^H + \mathbf{H}_2^{\beta(i)}\left(\mathbf{H}_2^{\beta(i)}\right)^H$. The equalisation based on pseudo circulant channel matrices is then performed as presented in our co-pending European Patent Application for the single channel case. The PRP-OFDM postfix based blind channel estimation is performed based on **R**($i$) as presented above.

**Claims**

1. A method of communication using Orthogonal Frequency Division Multiplexing OFDM from a transmitter (1) comprising a plurality of transmit antenna means and a receiver (2) comprising at least one receive antenna means, the method comprising generating bit streams and corresponding sets of N frequency domain carrier amplitudes, $\tilde{\mathbf{s}}(kN$

+ $j$), $0 \leq j \leq N - 1$, modulated as OFDM symbols subsequently to be transmitted from a transmitter, where k is the OFDM symbol number and $j$ indicates the corresponding OFDM carrier number, inserting (15) affix information into guard intervals between consecutive time domain OFDM symbols, transmitting said time domain OFDM symbols including said affix information from said transmitter to said receiver, using said affix information at the receiver to estimate the Channel Impulse Responses $\hat{\mathbf{H}}_{lm}$ between the $l$th transmit and $m$th receive antenna of the transmission channels between said transmitter and said receiver, and using the estimated Channel Impulse Response $\hat{\mathbf{H}}_{lm}$ between the $l$th transmit and $m$th receive antenna to demodulate said bit streams in the signals received at said receiver,

selecting said affix information that it is known to said receiver as well as to said transmitter, and is mathematically equivalent to a vector $\mathbf{c}_D$ that is common to said time domain OFDM symbols multiplied by at least first weighting factors $\alpha_k$ that are different for one time domain OFDM symbol $k$ than for another and second weighting factors $w_i$ ($k$) that enable one of said transmit antenna means $i$ to be distinguished from another, wherein said transmitter uses $N_t$ transmit antenna means and the receiver uses $N_r$ receive antenna means, **characterized in that** $M'$ consecutive time domain OFDM data symbols are encoded by a specific space-time encoder $\mathcal{M}$ (10) such that the encoder $\mathcal{M}$ produces $M$ time domain OFDM data signals outputs for each of the $N_t$ transmit antenna means, and said vector

$\mathbf{c}_D$ is encoded by a specific space-time encoder $\mathcal{W}$ (12) such that the encoder $\mathcal{W}$ produces $M$ affixes for each of the $N_t$ transmit antenna means corresponding to said affix information weighted by said first and second weighting factors $\alpha_k$ and $w_i(k)$, the resulting affixes being inserted between time domain OFDM data symbols for each of the $N_t$ transmit antenna means.

2. A method of communication as claimed in claim 1, wherein said first weighting factors $\alpha_k$ have pseudo-random values.

3. A method of communication as claimed in claim 1 or 2, wherein said first weighting factors $\alpha_k$ have complex values.

4. A method of communication as claimed in any preceding claim, wherein said first weighting factors $\alpha_k$ are deterministic and are known to said receiver as well as to said transmitter independently of current communication between said receiver and said transmitter.

5. A method of communication as claimed in any of claims 1 to 3, wherein said first weighting factors $\alpha_k$ are communicated from said transmitter to said receiver.

6. A method of communication as claimed in any preceding claim, wherein all transmit antenna outputs over $M$ consecutive OFDM time domain symbols, including time domain OFDM data symbols space-time encoded by $M$ and pseudo-random affixes space-time encoded by $W$, are grouped into a **block S**, for which said first weighting factors $\alpha_k$ are the same for OFDM symbols of the same **block S** but are different for OFDM symbols of different **block S.**

7. A method of communication as claimed in claim 6, wherein said transmitted affixes enable the separation at said receiver of the transmitted guard interval affix information of said **block S,** and said second weighting factors $w_i(k)$ enable the separation and estimation at said receiver of the different physical channels between said transmit antenna means and said at least one receive antenna means.

8. A method of communication as claimed in any preceding claim, wherein a matrix $\mathbf{W}$ corresponding to $M \times N_t$ of said second weighting factors $w_i(k)$ for a number $M$ of consecutive symbols and for said $N_t$ transmit antenna means is an orthogonal matrix such that when multiplied by its complex conjugate transpose $(\mathbf{W})^{T})^*$ the result is the identity matrix $\mathbf{I}$, weighted by a gain factor $g_0$ having a non-zero real value i.e. $g_0\mathbf{I} = \mathbf{W}^H\mathbf{W}.$

9. A method of communication as claimed in claim 8, wherein demodulating said bit streams includes, for each said receive antenna means, multiplying a signal derived from a received signal $\mathbf{d}_m$ by the complex conjugate transpose of the Kronecker product of said matrix of said second weighting factors $w_i(k)$ for said transmit antenna means by the identity matrix $(\mathbf{W} \times \mathbf{I}_D)^H$ and using channel estimates derived form the results in demodulating said bit streams.

10. A method of communication as claimed in any preceding claim, wherein the matrix of said second weighting factors $w_i(k)$ for said transmit antenna means and for a number $N_T$ of consecutive symbols equal to the number $N_T$ of said transmit antenna means is a non-orthogonal matrix $\mathbf{W}$ such that when multiplied by its complex conjugate transpose

$((\mathbf{W})^T)^*$ the result is different from the identity matrix $\mathbf{I}$, weighted by a gain factor $g_0$ having a non-zero real value i.e. $g_0\mathbf{I} \neq \mathbf{W}^H\mathbf{W}$.

**11.** A method of communication as claimed in claim 9, wherein the matrix of said second weighting factors $w_i(k)$ for said transmit antenna means and for a number $N_t$ of consecutive symbols equal to the number $N_t$ of said transmit antenna means is a matrix $\mathbf{W}$ such that $\mathbf{W}$ alone is non-orthogonal, but $\mathbf{W}$ combined with the corresponding pseudo-random factors $\alpha_k$ is orthogonal.

**12.** A method of communication as claimed in any preceding claim, wherein said second weighting factors $w_i(k)$ take different values for each of said transmit antenna means so as to enable said physical channels to be distinguished.

**13.** A method of communication as claimed in any preceding claim, wherein estimating the Channel Impulse Response $\mathbf{H}_{lm}$ of the transmission channels between said transmitter and said receiver comprises a step of making a moving average estimation over a plurality of symbol periods of channels which are mathematically equivalent to the relationship:

$$\bar{\mathbf{h}}_{lm}^{D}(n) = \sum_{k=0}^{n} J_0\left(2\pi f_D k\Delta T\right)\breve{\mathbf{h}}_{lm}^{D}(n-k)$$

where $J_0(\cdot)$ is the 0th order Bessel function, $f_D$ is the Doppler frequency, $\Delta T$ is the MTMR PRP-OFDM block duration and

$$\breve{\mathbf{h}}_{lm}^{D}(n)$$

is zero-mean complex Gaussian of constant variance.

**14.** A system comprising a transmitter (1) having a plurality of transmit antenna means and a receiver (2) comprising at least one receive antenna means, wherein the transmitter is arranged to generate bit streams and corresponding set of N frequency domain carrier amplitudes $\tilde{s}$ ($k\mathbf{N}$+j), $0 \leq j \leq$ N-1 modulated as OFDM symbols for transmission from the transmitter, where k is the OFDM symbol number and j indicates the corresponding OFDM carrier number, and the transmitter is arranged to insert affix information (15) into guard intervals between consecutive time domain OFDM symbols, and to transmit said time domain OFDM symbols including said affix information from said transmitter to said receiver, wherein the receiver is arranged to use said affix information to estimate the Channel Impulse Responses $\mathrm{H}_{lm}$ between the $l$th transmit and $m$th receive antenna of the transmission channels between said transmitter and said receiver, and using the estimated Channel Impulse Response $\hat{\mathbf{H}}_{lm}$ between the $l$th transmit and $m$th transmit and $m$th receive antenna to demodulate said bit streams in the signals received at said receiver, wherein the receiver is arranged to select said affix information that it is known to said receiver as well as to said transmitter, and is mathematically equivalent to a vector $\mathbf{c}_D$ that is common to said time domain OFDM symbols multiplied by at least first weighting factors $\alpha_k$ that are different for one time domain OFDM symbol $k$ than for another and second weighting factors $w_i(k)$ that enable one of said transmit antenna means $i$ to be distinguished from another, wherein said transmitter is arranged to use $N_t$ transmit antenna means and the receiver is arranged to use $N$r receive antenna means, **characterized in that** a specific space-time encoder $M\mathcal{M}$ (10) is arranged to encode $M'$ consecutive time domain OFDM data symbols such that the encoder $M$ produces $M$ time domain OFDM data signals outputs for each of the $N_t$ transmit antenna means, and a specific space-time encoder $W\,\mathcal{W}$(12) is arranged to encode said vector $\mathbf{c}_D$ such that the encoder $\mathcal{W}$ produces $M$ affixes for each of the $N_t$ transmit antenna means corresponding to said affix information weighted by said first and second weighting factors $\alpha_k$ and $w_i(k)$, the resulting affixes being inserted between time domain OFDM data symbols for each of the $N_t$ transmit antenna means.

**Patentansprüche**

**1.** Kommunikationsverfahren, welches Orthogonal Frequency Division Multiplexing OFDM von einem Sender (1), welcher eine Vielzahl von Sendeantenneneinrichtungen aufweist, und einem Empfänger (2) verwendet, welcher mindestens eine Empfangsantenneneinrichtung aufweist, wobei das Verfahren die Erzeugung von Bitströmen und von entsprechenden Gruppen von N Frequenzbereichs-Trägeramplituden, $\tilde{s}(kN + j)$, $0 \leq j \leq N-1$ aufweisen, welche als OFDM-Symbole im Anschluss an die Übertragung von einem Sender moduliert werden, wobei k die OFDM-Symbolnummer ist und j die entsprechende OFDM-Trägernummer anzeigt, die Einfügung (15) von Affix-Informationen in Schutzintervalle zwischen aufeinanderfolgenden Zeitbereichs-OFDM-Symbolen, die Übertragung der Zeitbereichs-OFDM-Symbole einschließlich der Affix-Informationen von dem Sender zu dem Empfänger, die Verwendung der Affix-Informationen beim Empfänger zur Schätzung der Kanalimpulsantworten $\hat{H}_{lm}$ zwischen der l-ten Sendeantenne und der m-ten Empfangsantenne der Sendekanäle zwischen dem Sender und dem Empfänger, und die Verwendung der geschätzten Kanalimpulsantwort $H_{lm}$ zwischen der l-ten Sendeantenne und der m-ten Empfangsantenne zur Demodulation der Bitströme in den Signalen, welche an dem Empfänger empfangen werden, aufweist:

Selektion der Affix-Informationen, welche sowohl dem Empfänger als auch dem Sender bekannt sind, und welche einem Vektor $C_D$, welcher den Zeitbereichs-OFDM-Symbolen gemeinsam ist, mathematisch äquivalent ist, wobei die Zeitbereichs-OFDM-Symbole mit zumindest ersten Gewichtungsfaktoren $\alpha_k$ multipliziert werden, die für ein Zeitbereichs-OFDM-Symbol k unterschiedlich sind als für ein anderes, sowie mit zweiten Gewichtungsfaktoren $w_i(k)$ multipliziert werden, welche es einer der Sendeantenneneinrichtungen I ermöglichen, voneinander unterschieden zu werden, wobei der Sender $N_t$ Sendeantenneneinrichtungen und der Empfänger $N_r$ Empfangsantenneneinrichtungen verwendet, **dadurch gekennzeichnet, dass** M' aufeinanderfolgende Zeitbereichs-OFDM-Datensymbole mit Hilfe eines spezifischen Raum-Zeit-Encoders $M$ (10) codiert werden, so dass der Encoder $M$ M Zeitbereichs-OFDM-Datensignalausgänge für jede der $N_t$ Sendeantenneneinrichtungen erzeugt, und der Vektor $C_D$ mit Hilfe eines spezifischen Raum-Zeit-Encoders $W$ (12) codiert wird, so dass der Encoder $W$ eine Anzahl M Affixe bzw. Anhänge für jede der $N_t$ Sendeantenneneinrichtungen erzeugt, welche den mit den ersten und zweiten Gewichtungsfaktoren $\alpha_k$ und $w_i(k)$ gewichteten Affix-Informationen entsprechen, wobei die resultierenden Affixe zwischen Zeitbereichs-OFDM-Datensymbole für jede der $N_t$ Sendeantenneneinrichtungen eingefügt werden.

2.  Kommunikationsverfahren nach Anspruch 1, **dadurch gekennzeichnet, dass** die ersten Gewichtungsfaktoren $\alpha_k$ Pseudozufallswerte aufweisen.

3.  Kommunikationsverfahren nach Anspruch 1 oder 2, **dadurch gekennzeichnet, dass** die ersten Gewichtungsfaktoren $\alpha_k$ komplexe Werte aufweisen.

4.  Kommunikationsverfahren nach einem der vorhergehenden Ansprüche, **dadurch gekennzeichnet, dass** die ersten Gewichtungsfaktoren $\alpha_k$ deterministisch sind und sowohl dem Empfänger als auch dem Sender unabhängig von einer augenblicklichen Kommunikation zwischen dem Empfänger und dem Sender bekannt sind.

5.  Kommunikationsverfahren nach einem der Ansprüche 1 bis 3, **dadurch gekennzeichnet, dass** die ersten Gewichtungsfaktoren $\alpha_k$ dem Empfänger von dem Sender mitgeteilt werden.

6.  Kommunikationsverfahren nach einem der vorhergehenden Ansprüche, **dadurch gekennzeichnet, dass** alle Sendeantennenausgänge über M aufeinanderfolgende OFDM-Zeitbereichssymbole, welche Zeitbereichs-OFDM-Datensymbole aufweisen, die mit Hilfe des Encoders $M$ Raum-Zeit-codiert sind, und pseudozufällige Affixe einschließen, welche mit Hilfe des Encoders $W$ Raum-Zeit-codiert sind, in einen Block S gruppiert werden, für welchen die ersten Gewichtungsfaktoren $\alpha_k$ für OFDM-Symbole desselben Blocks S identisch sind, jedoch für OFDM-Symbole eines unterschiedlichen Blocks S verschieden sind.

7.  Kommunikationsverfahren nach Anspruch 6, **dadurch gekennzeichnet, dass** die gesendeten Affixe die Trennung der gesendeten Schutzintervall-Affixinformationen von Block S an dem Empfänger ermöglichen, und dass die zweiten Gewichtungsfaktoren $w_i(k)$ die Trennung und Schätzung der unterschiedlichen physikalischen Kanäle zwischen den Sendeantenneneinrichtungen und der mindestens einen Empfangsantenneneinrichtung beim Empfänger ermöglichen.

8.  Kommunikationsverfahren nach einem der vorhergehenden Ansprüche, **dadurch gekennzeichnet, dass** eine Matrix W, welche M x$N_t$ der zweiten Gewichtungsfaktoren $w_i(k)$ für eine Anzahl M konsekutiver Symbole und für die $N_t$ Sendeantenneneinrichtungen entspricht, eine orthogonale Matrix ist, so dass bei Muliplikation mit ihrer komplex-konjugierten Transponierten $((W)^T)^*$ das Ergebnis die Identitätsmatrix I ist, welche mit einem Verstärkungsfaktor

$g_0$ mit einem Echtwert nicht Null, d.h. $g_0 I = W^H W$, gewichtet wird.

9. Kommunikationsverfahren nach Anspruch 8, **dadurch gekennzeichnet, dass** die Demodulation des Bitstroms für jede der Empfangsantenneneinrichtungen die Multiplikation eines Signals, welches von einem empfangenen Signal $d_m$ von der komplex-konjugierten Transponierten des Kronecker-Produkts der Matrix der zweiten Gewichtungsfaktoren $w_i(k)$ für die Sendeantenneneinrichtung abgeleitet wird, mit der Identitätsmatrix $(W \times I_D)^H$ sowie die Verwendung von Kanalschätzungen einschließt, welche von den Ergebnissen bei der Demodulation der Bitströme abgeleitet werden.

10. Kommunikationsverfahren nach einem der vorhergehenden Ansprüche, **dadurch gekennzeichnet, dass** die Matrix der zweiten Gewichtungsfaktoren $w_i(k)$ für die Sendeantenneneinrichtungen und für eine Anzahl $N_r$ konsekutiver Symbole gleich der Anzahl $N_r$ der Sendeantenneneinrichtungen eine nicht-orthogonale Matrix W ist, so dass bei Multiplikation mit ihrer komplex-konjugierten Transponierten $((W)^T)^*$ das Ergebnis unterschiedlich ist zu der Identitätsmatrix I, welche mit einem Verstärkungsfaktor $g_0$ mit einem Echtwert nicht Null, d.h. $g_0 I \neq W^H W$, gewichtet wird.

11. Kommunikationsverfahren nach Anspruch 9, **dadurch gekennzeichnet, dass** die Matrix der zweiten Gewichtungsfaktoren $w_i(k)$ für die Sendeantenneneinrichtungen und für eine Anzahl $N_t$ konsekutiver Symbole gleich der Anzahl $N_t$ der Sendeantenneneinrichtungen eine Matrix W ist, so dass W alleine nicht-orthogonal ist, jedoch kombiniert mit den entsprechenden pseudozufälligen Faktoren $\alpha_k$ orthogonal ist.

12. Kommunikationsverfahren nach einem der vorhergehenden Ansprüche, **dadurch gekennzeichnet, dass** die zweiten Gewichtungsfaktoren $w_i(k)$ unterschiedliche Werte für jede der Sendeantenneneinrichtung aufweisen, so dass eine Unterscheidung der physikalischen Kanäle ermöglicht wird.

13. Kommunikationsverfahren nach einem der vorhergehenden Ansprüche, **dadurch gekennzeichnet, dass** die Schätzung der Kanalimpulsantwort $H_{lm}$ der Sendekanäle zwischen dem Sender und dem Empfänger einen Schritt der Durchführung einer beweglichen durchschnittlichen Schätzung über eine Vielzahl von Symbolperioden von Kanälen, welche mathematisch äquivalent zu der nachfolgenden Beziehung sind, aufweist:

$$\mathbf{h}_{lm}^D (n) = \sum_{k=0}^{n} J_0 \left( 2\pi f_D k \Delta T \right) \mathbf{\bar{h}}_{lm}^D (n - k)$$

wobei $J_0(\cdot)$ die Besselfunktion nullter Ordnung ist, $f_D$ die Dopplerfrequenz ist, $\Delta T$ die MTMR PRP-OFDM Blockdauer ist und $h_{lm}(n)$ eine mittelwertfreie komplexe Gauss-Funktion konstanter Varianz ist.

14. System, welches einen Sender (1) mit einer Vielzahl von Sendeantenneneinrichtungen sowie einen Empfänger (2) mit mindestens einer Empfangsantenneneinrichtung aufweist, wobei der Sender zur Erzeugung von Bitströmen und einer entsprechenden Gruppe von N Frequenzbereichs-Trägeramplituden $\tilde{s}(kN+j)$, $0 \leq j \leq N-1$ ausgelegt ist, welche als OFDM-Symbole für eine Übertragung vom Sender moduliert sind, wobei $k$ die OFDM-Symbolnummer ist und $j$ die entsprechende OFDM-Trägernummer anzeigt, und der Sender zur Einfügung von Affix-Informationen (15) in Schutzintervalle zwischen aufeinanderfolgenden Zeitbereichs-OFDM-Symbolen ausgelegt ist, und zur Sendung von Zeitbereichs-OFDM-Symbolen, welche die Affix-Informationen von dem Sender an den Empfänger einschließen, wobei der Empfänger zur Verwendung der Affix-Informationen zur Schätzung der Kanalimpulsantworten $\hat{H}_{lm}$ zwischen der $l$-ten Sendeantenne und $m$-ten Empfangsantenne der Sendekanäle zwischen dem Sender und dem Empfänger ausgelegt ist, und die geschätzte Kanalimpulsantwort $H_{lm}$ zwischen der $l$-ten Sendeantenne und der $m$-ten Empfangsantenne zur Demodulation der Bitströme in den Signalen, welche an dem Empfänger empfangen werden, verwendet werden, wobei der Empfänger zur Selektion der Affix-Informationen, welche sowohl dem Empfänger als auch dem Sender bekannt sind, und welche einem Vektor $C_D$, welcher den Zeitbereichs-OFDM-Symbolen gemeinsam ist, mathematisch äquivalent ist, ausgelegt ist, wobei die Zeitbereichs-OFDM-Symbole mit zumindest ersten Gewichtungsfaktoren $\alpha_k$ multipliziert werden, die für ein Zeitbereichs-OFDM-Symbol $k$ unterschiedlich sind als für ein anderes, sowie mit zweiten Gewichtungsfaktoren $w_i(k)$ multipliziert werden, welche es einer der Sendeantenneneinrichtungen $j$ ermöglichen, voneinander unterschieden zu werden, wobei der Sender zur Verwendung von $N_t$ Sendeantenneneinrichtungen und der Empfänger zur Verwendung von $N_r$ Empfangsantenneneinrichtungen ausgelegt ist, **dadurch gekennzeichnet, dass** ein spezifischer Raum-Zeit-Encoder $M$ (10) zur Codierung von M' aufeinanderfolgenden Zeitbereichs-OFDM-Datensymbolen ausgelegt ist, so dass der Encoder $M$ M Zeitbereichs-OFDM-Datensignalausgänge für jede der $N_t$ Sendeantenneneinrichtungen erzeugt, und ein spezifischer Räum-Zeit-Encoder *W* (12) zur Codierung des Vektors $C_D$ ausgelegt ist, so dass der Encoder *W* eine Anzahl M Affixe bzw. Anhänge für jede der $N_t$ Sendeantenneneinrichtungen erzeugt, welche den mit den ersten und zweiten Gewichtungsfaktoren $\alpha_k$ und *$w_i(k)$* gewichteten Affix-Informationen entsprechen, wobei die resultierenden Affixe zwischen Zeitbereichs-OFDM-Datensymbole für jede der $N_t$ Sendearitenneneinrichtungen eingefügt werden.

**Revendications**

1. Procédé de communication par multiplexage par répartition orthogonale de la fréquence OFDM depuis un émetteur (1) comprenant une pluralité de moyens d'antenne de transmission et un récepteur (2) comprenant au moins un moyen d'antenne de réception, le procédé comprenant les étapes consistant à générer des trains de bits et des ensembles correspondants de N amplitudes de porteuse de domaine fréquentiel, $\hat{s}(kN + j)$, $0 \leq j \leq N-1$, modulés comme symboles OFDM à transmettre subséquemment depuis un émetteur, où k est le numéro du symbole OFDM et j indique le numéro de porteuse OFDM correspondant, à insérer (15) des informations d'affixe dans des intervalles de garde entre des symboles OFDM de domaine temporel consécutifs, à transmettre lesdits symboles OFDM de domaine temporel comprenant lesdites informations d'affixe depuis ledit émetteur vers ledit récepteur, à utiliser lesdites informations d'affixe au niveau du récepteur pour estimer les réponses impulsionnelles de canal $\hat{H}_{lm}$ entre la l$^{ième}$ antenne de transmission et la m$^{ième}$ antenne de réception des canaux de transmission entre ledit émetteur et ledit récepteur, et à utiliser la réponse impulsionnelle de canal $\hat{H}_{lm}$ entre la l$^{ième}$ antenne de transmission et la m$^{ième}$ antenne de réception pour démoduler lesdits trains de bits dans les signaux reçus au niveau dudit récepteur, à sélectionner lesdites informations d'affixe qui sont connues dudit récepteur ainsi que dudit émetteur, et qui sont mathématiquement équivalentes à un vecteur $c_D$ qui est commun auxdits symboles OFDM de domaine temporel multipliés par au moins des premiers facteurs de pondération $\alpha_k$ qui sont différents pour un symbole OFDM de domaine temporel k à ceux d'un autre, et des seconds facteurs de pondération $w_i(k)$ qui permettent que l'un desdits moyen d'antenne de transmission i se distingue d'un autre, où ledit émetteur utilise $N_t$ moyens d'antenne de transmission et le récepteur utilise $N_r$ moyens d'antenne de réception, **caractérisé en ce que** M symboles de données OFDM de domaine temporel consécutifs sont encodés par un encodeur spatio-temporel spécifique ꟽ (10) de manière que l'encodeur ꟽ produise M sorties de signaux de données OFDM de domaine temporel pour chacun des $N_t$ moyens d'antenne de transmission, et ledit vecteur $c_D$ est encodé par un encodeur spatio-temporel spécifique $\omega$(12) de telle manière que l'encodeur $\omega$ produise M affixes pour chacun des $N_t$ moyens d'antenne de transmission correspondant auxdites informations d'affixe pondérées par lesdits premiers et seconds facteurs depondération $\alpha_k$ et $w_i(k)$, les affixes résultants étant insérés entre des symboles de données OFDM de domaine temporel pour chacun des $N_t$ moyens d'antenne de transmission.

2. Procédé de communication tel que revendiqué dans la revendication 1, dans lequel lesdits premiers facteurs de pondération $\alpha_k$ ont des valeurs pseudo-aléatoires.

3. Procédé de communication tel que revendiqué dans la revendication 1 ou la revendication 2, dans lequel lesdits premiers facteurs de pondération $\alpha_k$ ont des valeurs complexes.

4. Procédé de communication tel que revendiqué dans l'une quelconque des revendications précédentes, dans lequel lesdits premiers facteurs de pondération $\alpha_k$ sont déterministes et sont connus dudit récepteur ainsi que dudit émetteur indépendamment de la communication en cours entre ledit récepteur et ledit émetteur.

5. Procédé de communication tel que revendiqué dans l'une quelconque des revendications 1 à 3, dans lequel lesdits premiers facteurs de pondération $\alpha_k$ sont communiqués dudit émetteur audit récepteur.

6. Procédé de communication tel que revendiqué dans l'une quelconque des revendications précédentes, dans lequel toutes les sorties d'antenne de transmission sur M symboles de domaine temporel OFDM consécutifs, y compris les symboles de données OFDM de domaine temporel encodés spatio-temporellement par ꟽ et des affixes pseudo-aléatoires encodés spatio-temporellement par $\omega$, sont groupées dans un bloc S, pour lequel lesdits premiers facteurs de pondération $\alpha_k$ sont les mêmes pour les symboles OFDM du même bloc S mais sont différents pour des symboles OFDM d'un bloc S différent.

**7.** Procédé de communication tel que revendiqué dans la revendication 6, dans lequel lesdits affixes transmis permettent la séparation au niveau dudit récepteur des informations d'affixe d'intervalle de garde transmises dudit bloc S, et lesdits seconds facteurs de pondération $w_i(k)$ permettent la séparation et l'estimation au niveau dudit récepteur des différents canaux physiques entre lesdits moyens d'antenne de transmission et ledit au moins un moyen d'antenne de réception.

**8.** Procédé de communication tel que revendiqué dans l'une quelconque des revendications précédentes, dans lequel une matrice W correspondant à M x $N_t$ desdits seconds facteurs de pondération $w_i(k)$ pour un nombre M de symboles consécutifs et pour lesdits $N_t$ moyens d'antenne de transmission est une matrice orthogonale telle que, lorsqu'elle est multipliée par sa transposée conjuguée complexe $((W)^T)^*$, le résultat est la matrice identité I pondérée par un facteur de gain $g_0$ ayant une valeur réelle non nulle, c'est-à-dire: $g_0 I = W^H W$.

**9.** Procédé de communication tel que revendiqué dans la revendication 8, dans lequel la démodulation desdits trains de bits comprend, pour chacun desdits moyens d'antenne de réception, les étapes consistant à multiplier un signal dérivé d'un signal reçu $d_m$ par la transposée conjuguée complexe du produit de Kronecker de ladite matrice desdits seconds facteurs de pondération $w_i(k)$ pour lesdits moyens d'antenne de transmission par la matrice identité $(W \times I_D)^H$ et à utiliser les estimations de canaux dérivées des résultats de la démodulation desdits trains de bits.

**10.** Procédé de communication tel que revendiqué dans l'une quelconque des revendications précédentes, dans lequel la matrice desdits seconds facteurs de pondération $w_i(k)$ pour lesdits moyens d'antenne de transmission et pour un nombre $N_T$ de symboles consécutifs égal au nombre $N_T$ desdits moyens d'antenne de transmission est une matrice non orthogonale W telle que, lorsqu'elle est multipliée par sa transposée conjuguée complexe $((W)^T)^*$, le résultat est différent de la matrice identité I pondérée par un facteur de gain $g_0$ ayant une valeur réelle non nulle, c'est-à-dire: $g_0 I = W^H W$.

**11.** Procédé de communication tel que revendiqué dans la revendication 9, dans lequel la matrice desdits seconds facteurs de pondération $w_i(k)$ pour lesdits moyens d'antenne de transmission et pour un nombre $N_t$ de symboles consécutifs égal au nombre $N_t$ desdits moyens d'antenne de transmission est une matrice W telle que W seule est non orthogonale, mais W combinée aux facteurs pseudo-aléatoires correspondants $\alpha_k$ est orthogonale.

**12.** Procédé de communication tel que revendiqué dans l'une quelconque des revendications précédentes, dans lequel lesdits seconds facteurs de pondération $w_i(k)$ prennent différentes valeurs pour chacun desdits moyens d'antenne de transmission de manière à permettre que lesdits canaux physiques se distinguent les uns des autres.

**13.** Procédé de communication tel que revendiqué dans l'une quelconque des revendications précédentes, dans lequel l'estimation de la réponse impulsionnelle de canal $H_{lm}$ des canaux de transmission entre ledit émetteur et ledit récepteur comprend une étape consistant à procéder à une estimation moyenne mobile sur une pluralité de périodes de symboles de canaux qui sont mathématiquement équivalentes à la relation:

$$\overline{\mathbf{h}}_{lm}^{D}(n) = \sum_{k=0}^{D} J_0\left(2\pi f_D k \Delta T\right) \breve{\mathbf{h}}_{lm}^{D}(n-k)$$

où $J_0(.)$ est la fonction de Bessel d'ordre 0, $f_D$ est la fréquence de Doppler, $\Delta T$ est la durée du bloc MTMR PRP-OFDM et $\hat{h}_{lm}^{D}(n)$ est une gaussienne complexe de moyenne nulle de variance constante.

**14.** Système comprenant un émetteur (1) comprenant une pluralité de moyens d'antenne de transmission et un récepteur (2) comprenant au moins un moyen d'antenne de réception, dans lequel l'émetteur est arrangé pour générer des trains de bits et des ensembles correspondants de N amplitudes de porteuse de domaine fréquentiel, $\hat{s}(kN + j)$, $0 \le j \le N-1$, modulés comme symboles OFDM pour une transmission depuis l'émetteur, où k est le numéro du symbole OFDM et j indique le numéro de porteuse OFDM correspondant, et l'émetteur est arrangé pour insérer des informations d'affixe (15) dans des intervalles de garde entre des symboles OFDM de domaine temporel consécutifs, et pour transmettre lesdits symboles OFDM de domaine temporel comprenant lesdites informations d'affixe depuis ledit émetteur vers ledit récepteur, où le récepteur est arrangé pour utiliser lesdites informations d'affixe pour estimer les réponses impulsionnelles de canal $H_{lm}$ entre la $l^{ième}$ antenne de transmission et la $m^{ième}$ antenne de réception des canaux de transmission entre ledit émetteur et ledit récepteur, et pour utiliser la réponse impulsionnelle de

canal $\hat{H}_{lm}$ entre la l$^{ième}$ antenne de transmission et la m$^{ième}$ antenne de réception pour démoduler lesdits trains de bits dans les signaux reçus au niveau dudit récepteur, où le récepteur est arrangé pour sélectionner lesdites informations d'affixe qui sont connues dudit récepteur ainsi que dudit émetteur, et qui sont mathématiquement équivalentes à un vecteur $c_D$ qui est commun auxdits symboles OFDM de domaine temporel multipliés par au moins des premiers facteurs de pondération $\alpha_k$ qui sont différents pour un symbole OFDM de domaine temporel k à ceux d'un autre, et des seconds facteurs de pondération $w_i(k)$ qui permettent que l'un desdits moyen d'antenne de transmission i se distingue d'un autre, où ledit émetteur est arrangé pour utiliser $N_t$ moyens d'antenne de transmission et le récepteur est arrangé pour utiliser $N_r$ moyens d'antenne de réception, **caractérisé en ce qu'**un encodeur spatio-temporel $\mathfrak{m}$ (10) est arrangé pour encoder M symboles de données OFDM de domaine temporel consécutifs de manière que l'encodeur $\mathfrak{m}$ produise M sorties de signaux de données OFDM de domaine temporel pour chacun des $N_t$ moyens d'antenne de transmission, et un encodeur spatio-temporel spécifique $\omega$(12) est arrangé pour encoder ledit vecteur $c_D$ de telle manière que l'encodeur $\omega$ produise M affixes pour chacun des $N_t$ moyens d'antenne de transmission correspondant auxdites informations d'affixe pondérées par lesdits premiers et seconds facteurs de pondération $\alpha_k$ et $w_i(k)$, les affixes résultants étant insérés entre des symboles de données OFDM de domaine temporel pour chacun des $N_t$ moyens d'antenne de transmission.

FIG. 1

*FIG. 2*

*FIG. 3*

*FIG. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 02292730 A

- US 20020041635 A

**Non-patent literature cited in the description**

- **B. Muquet ; Z. Wang ; G. B. Giannakis ; M. de Courville ; P. Duhamel.** Cyclic Prefixing or Zero Padding for Wireless Multicarrier Transmissions. *IEEE Trans. on Communications*